**Europäisches Patentamt**

**European Patent Office**

**Office européen des brevets**

(19)

(11) Veröffentlichungsnummer : **0 182 965
B1**

(12)   **EUROPÄISCHE PATENTSCHRIFT**

(45) Veröffentlichungstag der Patentschrift :
21.12.88

(51) Int. Cl.⁴ : **C 21 C   5/48**

(21) Anmeldenummer : **85107677.8**

(22) Anmeldetag : **03.12.81**

(60) Veröffentlichungsnummer der früheren Anmeldung
nach Art. 76 EPÜ : **0053802**

(54) **Verfahren zum Schutz der Düsen und der feuerfesten Auskleidung eines Gefässes zum Frischen einer Metallschmelze.**

(30) Priorität : **05.12.80 DE 3045966**

(43) Veröffentlichungstag der Anmeldung :
**04.06.86 Patentblatt 86/23**

(45) Bekanntmachung des Hinweises auf die Patenterteilung : **21.12.88 Patentblatt 88/51**

(84) Benannte Vertragsstaaten :
**BE CH DE FR GB IT LI LU NL SE**

(56) Entgegenhaltungen :
DE–B– 1 758 816
DE–B– 1 915 133
DE–B– 2 326 754
US–A– 3 832 161
US–A– 3 844 768
US–A– 3 997 334
US–A– 4 066 442

(73) Patentinhaber : **KORTEC AG**
**Bahnhofstrasse 21**
**CH-6300 Zug (CH)**

(72) Erfinder : **Wells, William, Dipl.-Ing.**
**4610 Carmel Valley Road**
**Charlotte North Carolina (US)**
Erfinder : **Nosé, Dalton, Dipl.-Ing.**
**Rua da Glorida, 344/802**
**BR-20 241 Rio de Janeiro (BR)**

(74) Vertreter : **Blumbach Weser Bergen Kramer Zwirner Hoffmann Patentanwälte**
**Radeckestrasse 43**
**D-8000 München 60 (DE)**

**Beschreibung**

Die Erfindung betrifft ein Verfahren gemäß dem Oberbegriff des Patentanspruchs 1.

Durch die US-A-3 844 768 ist ein Verfahren dieser Art bekanntgeworden. Zum Frischen chromhaltiger Legierungsstähle werden mittels Düsen aus jeweils wenigstens 3 radial im Abstand voneinander angeordneten konzentrischen Rohren, durch die ein zentraler Kanal und Ringkanäle gebildet werden, Sauerstoff, ein Verdünnungsfluid und ein Schutzfluid unterhalb der Badoberfläche in die Metallschmelze eingeblasen. Der Sauerstoff bzw. ein sauerstoffhaltiges Gas wird hierbei dem zentralen Kanal zugeführt, das Verdünnungsfluid dem sich anschließenden inneren Ringkanal und das Schutzfluid dem äußeren Ringkanal. Das Verdünnungsfluid hat die Aufgabe das sich beim Frischprozeß entwickelnde Kohlenmonoxid zu verdünnen und so den Partialdruck des Kohlenmonoxids herabzusetzen, um den Chromverlust niedrig zu halten, wenn der Kohlenstoffgehalt der Metallschmelze einen vorgegebenen Wert unterschreitet. Als Verdünnungsfluid sind unter anderem Wasserdampf und zerstäubtes Wasser in einem Trägergas geeignet. Das Schutzfluid hat die Aufgabe den Düsenverbrauch herabzusetzen. Es soll aus einer kohlenwasserstoffhaltigen Flüssigkeit, beispielsweise Heizöl bestehen, in dem Wasserdampf oder Wassertröpfchen emulgiert sein können.

Durch die US-A-4 066 442 ist ein Verfahren zur Herstellung von Chromstahl in einem elektrischen Lichtbogenofen bekanntgeworden, bei dem eine chromhaltige Metallschmelze im Ofen dadurch entkohlt wird, daß durch den zentralen Kanal einer aus zwei konzentrischen Rohren bestehenden Düse Sauerstoff und durch den Ringkanal Wasserdampf in die Schmelze unterhalb des Badspiegels eingeblasen wird. Der Wasserdampf, der auch durch vorzugsweise zerstäubtes Wasser ersetzt werden kann, dient hierbei ebenfalls in erster Linie als Verdünnungsfluid zum Verdünnen des Kohlenmonoxids in der Schmelze. Daneben wirkt er als Oxidationsmittel, um die Wirkung des Sauerstoffs zu ergänzen, als Mittel für die thermische Steuerung und auch als Antiverschleißmittel.

Die US-A-3 832 161 beschreibt ein Verfahren zum Frischen einer Metallschmelze mittels einer unterhalb der Badoberfläche angeordneten Dreirohrdüse, durch deren zentralen Kanal Wasserdampf, Wasser oder zerstäubtes, in einem Trägergas suspendiertes Wasser, durch den sich anschließenden inneren Ringkanal Sauerstoff und durch den sich anschließenden äußeren Ringkanal Heizöl eingeblasen werden. Das durch den zentralen Kanal eingeleitete Fluid bewirkt durch endotherme Dissoziation eine Kühlung der überhitzten Zone vor der Düse und verhindert dadurch die Entstehung von braunem Rauch. Das durch den äußeren Ringkanal zugeführte Heizöl dient als Schutzfluid für die Düse.

Bei sämtlichen genannten Verfahren wird direkt der Durchfluß in den Ringkanälen geregelt das heißt auf einen den gewünschten Verfahrensbedingungen entsprechenden Wert eingestellt.

Aufgabe der Erfindung ist es, bei einem Verfahren der im Oberbegriff des Anspruchs 1 genannten Art den Düsenverbrauch und den Verbrauch an feuerfester Auskleidung zu verringern und damit eine höhere Standzeit der Einblasvorrichtung für das sauerstoffhaltige Gas zu erzielen.

Das erfindungsgemäße Verfahren ist durch die Merkmale des Anspruchs 1 gekennzeichnet. Vorteilhafte Ausgestaltungen dieses Verfahrens sind den Unteransprüchen zu entnehmen.

Durch die erfindungsgemäßen Maßnahmen ist es möglich geworden, eine Standzeit der Düsen und der die Düsen umgebenden feuerfesten Auskleidung von 400 Betriebsstunden zu erzielen. Die im Vergleich zu bekannten Verfahren vergrößerte Haltbarkeit der Düsen wird auf die vergrösserte Dissoziationswärme von Wasser im Vergleich zu Kohlenwasserstoffverbindungen sowie auf die verstärkte Kühlung des Düsenhalses beim Erwärmen und Verdampfen des zerstäubten Schutzfluids innerhalb der Düse zurückgeführt.

Die Erfindung wird durch Ausführungsbeispiele anhand von 2 Figuren näher erläutert. Es zeigen:

Fig. 1 eine Einblasvorrichtung zur Durchführung des erfindungsgemäßen Verfahrens bei einem im Schnitt dargestellten Herdofen;

Fig. 2 den die Einblasvorrichtung enthaltenden Abschnitt aus Fig. 1 in vergrößertem Maßstab.

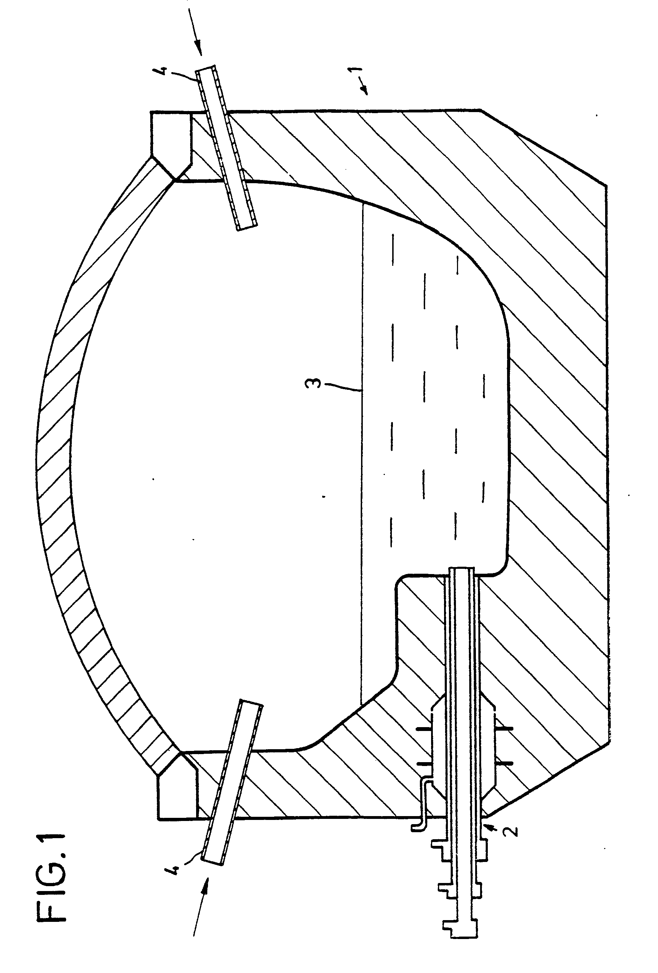

Fig. 1 stellt im Schnitt einen Herdofen 1, wie einen Siemens-Martin-Ofen, dar, durch dessen Seitenwand an wenigstens einer Stelle waagrecht eine Einblasvorrichtung 2 geführt ist, die unterhalb des Badspiegels 3 in das Gefäß mündet. Oberhalb des Badspiegels münden ferner zwei Brenner 4.

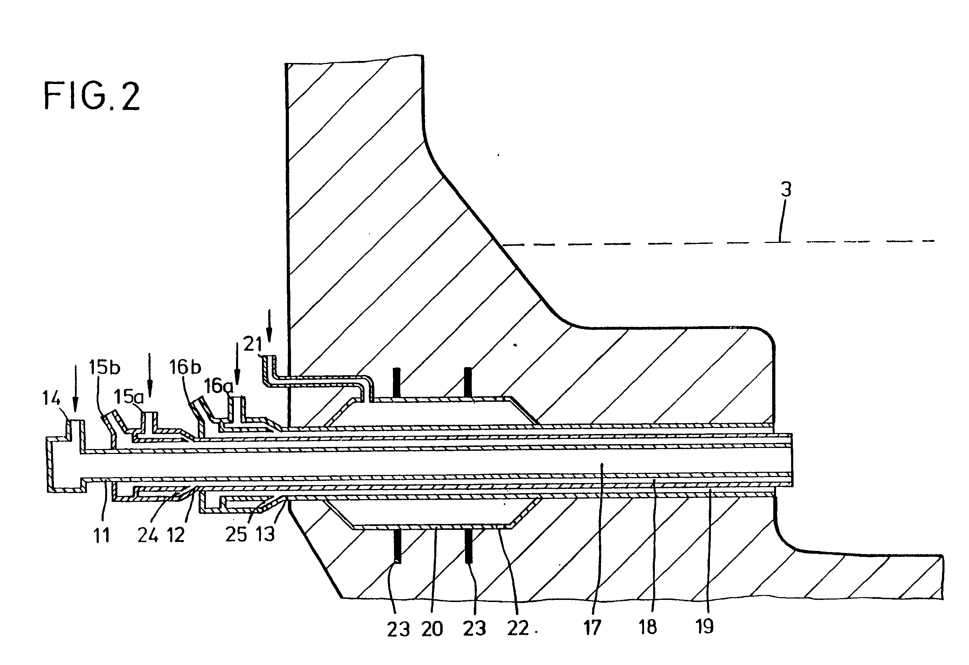

Wie Fig. 2 erkennen läßt, enthält die Manteldüse drei konzentrische, durch Abstandhalter (nicht dargestellt) im Abstand voneinander gehaltene Rohre 11, 12, 13, die Einlässe 14, 15a, 16a für Gase bzw. Gasgemische und Einlässe 15b und 16b für Flüssigkeiten enthalten. Durch diese Rohre wird ein zentraler Kanal 17 und es werden ein erster Ringkanal 18 und ein zweiter Ringkanal 19 gebildet. Die Mündung der Rohre in das Ofeninnere kann, wie dargestellt, in Form der Ringkanäle oder aber auch durch die Ringkanäle abdeckende Ringscheiben mit Austrittsöffnungen längs des Umfangs ausgebildet sein. Das äußere Rohr 13 ist im Mauerwerk verankert. Es ist ferner im äußeren Bereich der Ofenwand von einem geschlossenen Rohrabschnitt 20 umgeben, der einen Einlaß 21 für ein gasförmiges Medium sowie an dem der Düsenmündung zugekehrten Ende längs seines Umfangs verteilte Gasaustrittsöffnungen 22 aufweist. Ferner sind an der Außenfläche dieses Rohrabschnittes 20 zwei konzentrische Scheiben 23 aufgebracht. Der Rohrabschnitt 20 dient einschließlich der Scheiben 23 dazu, die zwischen der Feuerfestmasse und dem äußeren Mantelrohr 13 zurückströmenden brennbaren Gase daran zu hindern, bis nach außen zu gelangen.

Während des Frischprozesses werden durch den zentralen Kanal 17 Sauerstoff oder sauerstoffhaltige

Gase, wie $CO_2$, eingeblasen. Durch den ersten Ringkanal 18 und durch den zweiten Ringkanal 19 werden jeweils eine mittels eines Trägergases zerstäubte Flüssigkeit eingeblasen. Als Flüssigkeit wird Wasser verwendet. Als Trägergas eignen sich inerte Gase wie Stickstoff und Argon oder sauerstoffhaltige Gase wie CO, $CO_2$, Luft, $O_2$. Die Zerstäubung der Flüssigkeit mittels des Trägergases kann bereits vor dem Eintritt in den betreffenden Ringkanal erfolgen, vorzugsweise wird die Flüssigkeit jedoch innerhalb der Düse mittels des Trägergases zerstäubt. Zu diesem Zweck sind bei der Düse nach Fig. 2 für die Ringkanäle 18 und 19 jeweils zwei Einlässe vorgesehen, nämlich ein Gaseinlaß 15a bzw. 16a für das Trägergas und ein Flüssigkeitseinlaß 15b bzw. 16b für die Flüssigkeit. Das Trägergas wird hierbei jeweils über einen Ringspalt 24 bzw. 25 in den Ringkanal 18 bzw. 19 eingeführt und nimmt die über die Einlässe 15b und 16b zugeführte Flüssigkeit in feinverteilter Form mit. Da die Flüssigkeit bereits eine ausreichende Strecke vor dem Düsenkopf, d. h. der Mündung der Düse im Schmelzbad, zerstäubt wird, kann sie sich selbst bei hohen Strömungsgeschwindigkeiten unter Wärmeentzug der Umgebung ausreichend erwärmen und bereits innerhalb der Düse verdampfen, wodurch eine gute Kühlung des Düsenhalses erzielt wird. Das Schutzfluid dissoziiert im unmittelbaren Bereich des Düsenkopfes aufgrund der dort herrschenden hohen Temperaturen, wobei der dem Schmelzbad zugewandte Teil der Einblasvorrichtung gekühlt und vor Verschleiß und Abbrand geschützt wird.

Dem Rohrabschnitt 20 wird Stickstoff zugeführt, und zwar nur so viel, daß gerade durch das aus den Austrittsöffnungen 22 austretende Stickstoffgas ein Zurückströmen der brennbaren Gase zwischen der Feuerfestmasse und dem äußeren Mantelrohr 13 verhindert wird.

## Beispiel

| Innenrohr 11 | Innendurchmesser 14 mm |
| | Außendurchmesser 16 mm |
| erstes Mantelrohr 12 | Innendurchmesser 18 mm |
| | Außendurchmesser 20 mm |
| zweites Mantelrohr 13 | Innendurchmesser 22 mm |
| | Außendurchmesser 32 mm |

Druck und Durchflußmengen der Gase, Gasgemische bzw. Flüssigkeiten wurden gemessen in den Zuleitungen zu den Kanälen 17, 18 und 19, d. h. vor den Gaseinlässen 14, 15a und 16a sowie den Flüssigkeitseinlässen 15b und 16b.

Versuche haben ergeben, daß die Werte innerhalb der folgenden Bereiche liegen können:

| | Medium | Druck (bar) | Durchflußmenge |
|---|---|---|---|
| zentraler Kanal 17 | sauerstoffhaltiges Gas ($O_2$) | 2,5 bis 4,5 | 2 bis 5 $Nm^3$/min |
| 1. Ringkanal 18 | Trägergas ($N_2$) | 2 bis 3,5 | 0,2 bis 0,6 $Nm^3$/min |
| | Flüssigkeit ($H_2O$) | 4 bis 6,0 | 0,3 − 0,7 l/min |
| 2. Ringkanal 19 | Trägergas ($N_2$) | 2 bis 3,5 | 0,2 − 0,6 $Nm^3$/min |
| | Flüssigkeit ($H_2O$) | 4 bis 6,0 | 0,3 − 0,7 l/min |

Besonders gute Ergebnisse im Hinblick auf die Haltbarkeit wurden erzielt, wenn die folgenden Bereiche eingehalten wurden:

| | Medium | Druck (bar) | Durchflußmenge |
|---|---|---|---|
| zentraler Kanal 17 | sauerstoffhaltiges Gas ($O_2$) | 3,0 bis 4,0 | 3,0 bis 4,0 $Nm^3$/min |
| 1. Ringkanal 18 | Trägergas ($N_2$) | 3,0 bis 3,5 | 0,3 − 0,5 $Nm^3$/min |
| | Flüssigkeit ($H_2O$) | 4,5 bis 5,5 | 0,4 − 0,6 l/min |
| 2. Ringkanal 19 | Trägergas ($N_2$) | 3,0 bis 3,5 | 0,3 − 0,5 $Nm^3$/min |
| | Flüssigkeit ($H_2O$) | 4,5 bis 5,5 | 0,4 − 0,6 l/min |

Die beschriebene Einblasvorrichtung gemäß Fig. 2 weist Einlässe 15b und 16b für das flüssige Medium sowie Einlässe 15a und 16a für das Trägergas auf, mit dem das flüssige Medium zerstäubt wird. Die Einlässe für das Trägergas sind jeweils über einen Ringraum durch Ringspalte 24 bzw. 25 mit dem zugehörigen Ringkanal 18 bzw. 19 verbunden, und zwar an einer Stelle, die in Strömungsrichtung hinter der Einspeisestelle des flüssigen Mediums in den betreffenden Ringkanal liegt. Die Ringspalte 24 bzw. 25 sind hierbei schräg in Strömungsrichtung geneigt. Die Ringspaltbreite kann einstellbar ausgebildet sein, um den Grad der Zerstäubung verändern und auf das Optimum einstellen zu können.

**Patentansprüche**

1. Verfahren zum Schutz der Düsen und der feuerfesten Auskleidung eines metallurgischen Gefäßes zum Frischen einer Metallschmelze, insbesondere von Roheisen, im Bereich einer unterhalb der Badoberfläche angeordneten Einblasvorrichtung mit einer Düse aus wenigstens drei konzentrischen Rohren, durch die ein zentraler Kanal und wenigstens zwei Ringkanäle gebildet werden, bei dem ferner durch den zentralen Kanal ein sauerstoffhaltiges Gas, durch einen Ringkanal mittels eines Trägergases ein Wasser enthaltendes Fluid im zerstäubten oder im verdampften Zustand und durch einen weiteren Ringkanal ein Wasser enthaltendes Fluid zugeführt werden, dadurch gekennzeichnet, daß als Schutzfluid nur wasser durch jeden der Ringkanäle mittels eines Trägergases eingeblasen wird und die Durchflußmengen der durch die Ringkanäle eingeblasenen Schutzfluide voneinander unabhängig über den Druck geregelt werden.

2. Verfahren nach Anspruch 1, dadurch gekennzeichnet, daß das Trägergas ein inertes Gas ist.

3. Verfahren nach Anspruch 1 oder 2, dadurch gekennzeichnet, daß das Trägergas ein sauerstoffhaltiges Gas (CO, $CO_2$, Luft) ist.

4. Verfahren nach einem der Ansprüche 1 bis 3, dadurch gekennzeichnet, daß bei einer aus drei Rohren (11, 12, 13) bestehenden Düse Druck und Durchflußmenge der Medien, gemessen in den Zuleitungen zu den Kanälen (17, 18, 19) der Düse wie folgt gewählt sind :

|  | Medium | Druck (bar) | Durchflußmenge |
|---|---|---|---|
| zentraler Kanal 17 | sauerstoffhaltiges Gas ($O_2$) | 2,5 bis 4,5 | 2 bis 5 $Nm^3$/min |
| 1. Ring- kanal 18 | Trägergas ($N_2$) | 2 bis 3,5 | 0,2 bis 0,6 $Nm^3$/min |
|  | Flüssigkeit ($H_2O$) | 4 bis 6,0 | 0,3 — 0,7 l/min |
| 2. Ring- kanal 19 | Trägergas ($N_2$) | 2 bis 3,5 | 0,2 — 0,6 $Nm^3$/min |
|  | Flüssigkeit ($H_2O$) | 4 bis 6,0 | 0,3 — 0,7 l/min |

5. Verfahren nach Anspruch 4, dadurch gekennzeichnet, daß Druck und Durchsatz der Medien wie folgt gewählt sind :

|  | Medium | Druck (bar) | Durchflußmenge |
|---|---|---|---|
| zentraler Kanal 17 | sauerstoffhaltiges Gas ($O_2$) | 3,0 bis 4,0 | 3,0 bis 4,0 $Nm^3$/min |
| 1. Ring- kanal 18 | Trägergas ($N_2$) | 3,0 bis 3,5 | 0,3 — 0,5 $Nm^3$/min |
|  | Flüssigkeit ($H_2O$) | 4,5 bis 5,5 | 0,4 — 0,6 l/min |
| 2. Ring- kanal 19 | Trägergas ($N_2$) | 3,0 bis 3,5 | 0,3 — 0,5 $Nm^3$/min |
|  | Flüssigkeit ($H_2O$) | 4,5 bis 5,5 | 0,4 — 0,6 l/min |

## Claims

1. A process for protecting the nozzles and the refractory lining of a metallurgical vessel for refining a molten metal bath, in particular of pig iron, in the region of an injection device which is arranged beneath the surface of the bath, having a nozzle comprising at least three concentric pipes which form a central conduit and at least two annular conduits, wherein moreover an oxygen-bearing gas is supplied through the central conduit, a water-containing fluid is supplied in atomised or vaporised condition through an annular conduit by means of a carrier gas and a water-containing fluid is supplied through a further annular conduit, characterised in that as a protective fluid only water is injected through each of the annular conduits by means of a carrier gas and the flow rates of the protective fluids which are injected through the annular conduits are regulated independently of each other by way of the pressure.

2. A process according to claim 1 characterised in that the carrier gas is an inert gas.

3. A process according to claim 1 or claim 2 characterised in that the carrier gas is an oxygen-bearing gas ($CO$, $CO_2$, air).

4. A process according to one of claims 1 to 3 characterised in that, with a nozzle consisting of three pipes (11, 12 and 13), the pressure and the flow rate of the media, as measured in the supply lines to the conduits (17, 18, 19) of the nozzle, are selected as follows :

|  | Medium | Pressure (bar) | Flow rate |
|---|---|---|---|
| Central conduit 17 | Oxygen-bearing gas ($O_2$) | 2.5 to 4.5 | 2 to 5 $Nm^3/min$ |
| 1st annular conduit 18 | Carrier gas ($N_2$) Liquid ($H_2O$) | 2 to 3.5 4 to 6.0 | 0.2 to 0.6 $Nm^3/min$ 0.3 to 0.7 l/min |
| 2nd annular conduit 19 | Carrier gas ($N_2$) Liquid ($H_2O$) | 2 to 3.5 4 to 6.0 | 0.2 to 0.6 $Nm^3/min$ 0.3 to 0.7 l/min |

5. A process according to claim 4 characterised in that the pressure and the flow rate of the media are selected as follows :

|  | Medium | Pressure (bar) | Flow rate |
|---|---|---|---|
| Central conduit 17 | Oxygen-bearing gas ($O_2$) | 3.0 to 4.0 | 3.0 to 4.0 $Nm^3/min$ |
| 1st annular conduit 18 | Carrier gas ($N_2$) Liquid ($H_2O$) | 3.0 to 3.5 4.5 to 5.5 | 0.3 to 0.5 $Nm^3/min$ 0.4 to 0.6 l/min |
| 2nd annular conduit 19 | Carrier gas ($N_2$) Liquid ($H_2O$) | 3.0 to 3.5 4.5 to 5.5 | 0.3 to 0.5 $Nm^3/min$ 0.4 to 0.6 l/min. |

## Revendications

1. Procédé de protection des tuyères et du garnissage réfractaire d'un récipient d'affinage d'un bain métallique, notamment de fonte, dans la région d'un dispositif d'insufflation qui est disposé en dessous de la surface du bain et qui comprend une buse constituée d'au moins trois tubes concentriques qui forment un canal central et au moins deux canaux annulaires, un gaz contenant de l'oxygène étant amené par le canal central, un fluide contenant de l'eau et à l'état pulvérisé ou vaporisé étant amené par un canal annulaire au moyen d'un gaz porteur et un fluide contenant de l'eau étant amené par un autre canal annulaire, caractérisé en ce qu'il consiste à n'insuffler comme fluide protecteur que de l'eau par chacun des canaux annulaires au moyen d'un gaz porteur et à régler les débits des fluides protecteurs insufflés par les canaux annulaires indépendamment l'un de l'autre par la pression.

2. Procédé suivant la revendication 1, caractérisé en ce que le gaz porteur est un gaz inerte.

3. Procédé suivant la revendication 1 ou 2, caractérisé en ce que le gaz porteur est un gaz contenant de l'oxygène (CO, $CO_2$, air).

4. Procédé suivant l'une des revendications 1 à 3, caractérisé en ce que pour une buse constituée de trois tubes (11, 12, 13), la pression et les débits des milieux mesurés dans les conduits d'amenée aux canaux (17, 18, 19) de la buse sont choisis de la manière suivante :

|  | Milieu | Pression (bar) | Débit |
|---|---|---|---|
| Canal central 17 | Gaz contenant de l'oxygène ($O_2$) | 2,5 à 4,5 | 2 à 5 $m^3$ normaux/min |
| 1er canal annulaire 18 | Gaz porteur ($N_2$) | 2 à 3,5 | 0,2 à 0,6 $m^3$ normaux/min |
|  | Liquide ($H_2O$) | 4 à 6,0 | 0,3 à 0,7 l/min |
| 2e canal annulaire 19 | Gaz porteur ($N_2$) | 2 à 3,5 | 0,2 à 0,6 $m^3$ normaux/min |
|  | Liquide ($H_2O$) | 4 à 6,0 | 0,3 à 0,7 l/min |

5. Procédé suivant la revendication 4, caractérisé en ce que la pression et le débit des milieux sont choisis de la manière suivante :

|  | Milieu | Pression (bar) | Débit |
|---|---|---|---|
| Canal central 17 | Gaz contenant de l'oxygène ($O_2$) | 3,0 à 4,0 | 3,0 à 4,0 $m^3$ normaux/min |
| 1er canal annulaire 18 | Gaz porteur ($N_2$) | 3,0 à 3,5 | 0,3 à 0,5 $m^3$ normaux/min |
|  | Liquide ($H_2O$) | 4,5 à 5,5 | 0,4 à 0,6 l/min |
| 2e canal annulaire 19 | Gaz porteur ($N_2$) | 3,0 à 3,5 | 0,3 à 0,5 $m^3$ normaux/min |
|  | Liquide ($H_2O$) | 4,5 à 5,5 | 0,4 à 0,6 l/min |

FIG.1

FIG.2

14  15b  15a  16b  16a  21  3

11  24  12  25  13

23  20  23  22  17  18  19

0 182 965

2